# EUROPEAN PATENT SPECIFICATION

(11) **EP 0 620 962 B1**
(45) Date of publication and mention of the grant of the patent: **17.06.1998**
(21) Application number: 94201016.6
(22) Date of filing: 14.04.1994
(51) Int. Cl.: A01B 33/16

(54) **A soil cultivating machine**
Bodenbearbeitungsmaschine
Machine de travail du sol

(30) Priority: 19.04.1993 NL 9300659
(43) Date of publication of application: 26.10.1994
(60) Divisional application: 97203589.3
(73) Proprietor: MAASLAND N.V., 3155 PD Maasland (NL)
(72) Inventor: Bom, Cornelis Johannes Gerardus, NL-3181 VC Rozenburg (NL)
(74) Representative: Mulder, Herman

(56) References cited:
- EP-A- 0 047 852
- EP-A- 0 109 724
- EP-A- 0 288 125
- NL-A- 7 706 042
- NL-A- 8 001 758
- US-A- 4 046 202

## Description

The present invention relates to a soil cultivating machine, comprising coupling means for connection to the front power lift of a tractor, especially intended for application in conjunction with a planting arrangement for coupling to the rear side of the tractor, such as a potato planter and the like, which machine comprises a frame provided with at least one row of soil cultivating members which extends transversely to the operational direction of travel of the machine, and which machine comprises at least at its trailing side a supporting arrangement for suspending the machine from the soil.

Such a machine is known from e.g. the laid open Dutch patent application 8700952. This known machine has the advantage that secondary soil preparation and planting of root crops in particular can be done in a cost-effective single pass of a manned tractor-machine combination. The known machine has the disadvantage, particularly on relatively heavy soils, that cultivated soil, after compression by the roller disposed behind the machine and particularly by the wheels of the tractor propelling and driving the machine, cannot be handled easily or at least advantageously to form ridges.

According to the invention, such a problem can be prevented or at least obviated to a considerable extent with the characterising features of claim 1. In this way, ridges may easily be formed and the worked earth is not compacted and clodded by either a roller or the tractor wheels.

According to an advantageous embodiment of the invention, a soil moving member exerts reaction forces essentially directed horizontally upon the soil to be displaced. This has the advantage that the soil layers with their respective moisture contents remain substantially in place, so that any loss of moisture due to moist soil which is worked upwards does not occur and no adverse conditions to germination are produced by mixing the often relatively dry top layer with underlying soil layers.

The machine according to the present invention particularly aims at working in conjunction with a planting arrangement, such as a potato planter. Hence, the invention also comprises a combination of a soil cultivating machine and a planting machine, such as a potato planter, with the soil cultivating machine comprising a frame in which there is provided at least one row of soil cultivating members extending transversely to the operational direction of travel of the machine, while the soil cultivating machine is provided with a soil moving arrangement provided with soil moving members for sideward displacement of the soil from a soil layer worked by the soil cultivating members and for the formation of ridges, said planting arrangement comprises furrow openers working in the top layer of said tillage ridges to open furrows, backfilling members to feed back mainly soil displaced by the furrow openers, and, behind said backfilling members, ridging-up members mainly operating on the sides of said strips of soil.

According to a further aspect of the invention the soil cultivating machine comprises a soil moving member of which the soil guiding faces are arranged in a V-shape, with the intersecting curve being in a vertical plane and inclined at an angle of between 80° and 100°, preferably 90°, to the operational direction of travel A. Also, the soil guiding faces of such a soil moving member are constituted by flat plates or flat parts of plates, whereas the guiding faces comprise a bottom edge extending horizontally, and a plate-type supporting member extends essentially horizontally, and is provided between the horizontally extending bottom edges of the guiding faces.

Yet another aspect of the invention is characin that the upper arm of the parallelogram construction comprises an adjusting member for adjusting the arm in length. The adjusting member can favourably be constituted by a screw spindle. Also, the soil moving members are, according to the invention, fitted on a carrier, of which an arm portion extending essentially upwards is part of the parallelogram construction.

The invention will be further explained with reference to the accompanying drawings, in which:
Figure 1 shows a plan view of the machine and the combination of machines in accordance with the invention;
Figure 2 is a side view in the direction of arrow II in Figure 1;
Figure 3 shows an enlargement of a portion of Figure 1, and
Figure 4 is a sectional view of a planting bed formed by the machine in accordance with the invention.

Corresponding parts in the drawings are indicated by identical reference numbers. The embodiments depicted and described herein serve to illustrate the inventive idea.

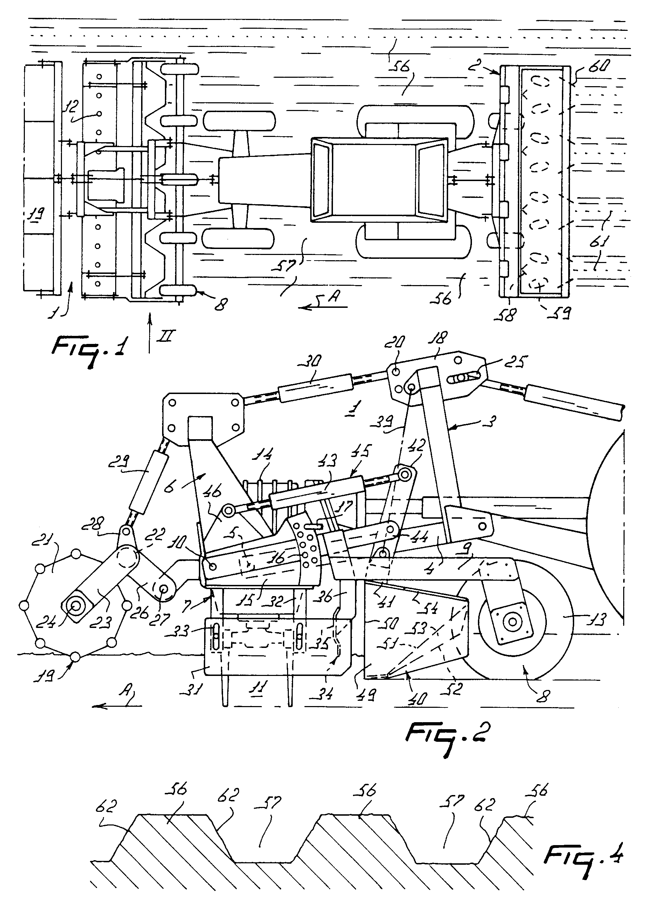

Figure 1 shows a rotary harrow 1 used in combination with a planting arrangement 2 being a potato planter in the present embodiment. As is also shown in Figure 2, the rotary harrow 1 is coupled to the front three-point lifting hitch of a tractor through an intermediate trestle 3.

Near its bottom side, the intermediate trestle 3 comprises a pair of essentially forwardly extending arms 4 which, near their front ends, are pivotably connected, through a hinge pin 5, to the lower side of a trestle 6 fitted on a frame 7 of the soil cultivating machine. The arms 4 are designed as two telescoping parts, although this can not be seen from the drawings. The two parts comprise one or several holes for a locking pin, which enables an arm to be adjusted in length in different positions. The upper pair of lugs 18 provided on the intermediate trestle 3 on behalf of the coupling with the top link of a tractor comprises, according to the invention, a slotted hole 25 in addition to one or several conventional holes 20. Hinge-mounted at both ends, a spacer member 30 adjustable in length, being a screw spindle in the present embodiment, is provided between the upper pair of lugs of the intermediate trestle 3 and that of the trestle 6 for the frame 7. The trestle 6 is provided with points of connection, by means of which it can be included in a known per se three-point hitch. At the rear side relative to the direction of travel A, the rotary harrow comprises a supporting member 8 connected to the frame part 7 through a pair of arms 9 rotating around a pivot 10. In the present embodiment, the supporting member 8 comprises five supporting elements 13 in the shape of wheels. Disposed at a pitch of 75 cms for the present working width amounting to 3 meters, they are mounted on a central carrier 55 which is bearing-mounted on the arms 9.

The rotary harrow 1 is a known per se soil cultivating implement for secondary soil working and, in the present 3 meters wide embodiment, it comprises twelve soil cultivating members 11. The soil cultivating members 11 are bearing-mounted on shafts 12 extending upwards in the frame 7. Within the frame part 7, the shafts 12, and hence the soil cultivating members 11, are in a driving connection with each other through gearwheels provided on the shafts. One of the two central shafts 12 also extends through the top side of the box-like frame 7 to one of two gearwheels being at right angles to, and in mesh with each other in a gearbox 14 provided on the frame. For driving the soil cultivating members 11, the gearbox 14 comprises a short external shaft which is connected to the power-take-off shaft of the tractor through a coupling shaft. The box-like frame 7 is closed at its ends by two upwardly extending cover plates 15. The pivot 10 is disposed on the part of said cover plates 15 projecting upwardly from the frame part 7. The upright plates 15 also serve as guides for the arms 9 of the supporting member 8. The rear portion of the cover and guide plate 15 is provided, near the rear edge, with holes 16, through which a pin 17 is fed, by means of which pin the frame part 7 rests on the arms 9 of the supporting member 8. By relocating the pins 17 in the respective holes 16, the working depth of the soil cultivating members 11 with respect to the supporting member 8 can be changed. For additional support and for stable operation, on the front side of the frame 7 there is provided a second supporting member 19 connected with the trestle 6 through a three-point hitch. To this end, the supporting member 19 comprises a carrier 22 extending parallel to the roller part 21, which carrier is connected on its ends with the shaft 24 of the roller 21 through bearing-mounted arms 23. The supporting member 19 comprises two lower pairs of lugs 26, each of which pairs is connected with the trestle 6 through a pivot 27. Centrally between the pairs of lugs 26, the supporting member 19 comprises a third pair of lugs 28 which is disposed on the carrier 22 at a side facing away from the pairs of lugs 26. A spacer member 29, adjustable in length, in the shape of a screw spindle in the present embodiment, and pivotably mounted on either end, is provided between the third pair of lugs 28 and an upper hitch point of the trestle 6.

Near the lateral ends of the frame part 7 there are disposed plates 31 extending substantially vertically and in the direction of travel by means of a pair of supports 32, which plates 31 are fitted movably in height with respect to the frame part 7 by means of slotted holes 33 provided in the plates 31. For crumbling the soil, the plates 31 work together with an outer soil cultivating member 11 and also function as guides for the soil being worked.

Immediately behind the row of soil cultivating members 11 there is also provided a crumbling and levelling member 34. This member comprises a plate 35 extending essentially vertically and over the width of the frame part 7, the lower part of which plate is folded backward through an angle of approximately 30° along a horizontal folding line. The plate is connected with the frame part 7 through a pair of upwardly extending arms 36 pivotably connected to a pair of arms 37 substantially extending in the direction of travel and being part of a parallelogram construction. Near the front edge of the frame part 7, the arms 37 are pivotably connected with a holder 38 mounted on the frame part. The holder 38 also functions as a guide for the arms 37. The plate 35 is adjustable in height with respect to the soil cultivating members 11 by means of a plurality of holes provided in an arm 36, which holes enable a dowel joint to be made with an arm 37.

According to the invention, a soil moving arrangement 40 is fitted in between the crumbling member 34 and the supporting member 8. It comprises a carrier 41, extending transversely to the direction of travel A, provided with a pair of upwardly extending arms 42, to each of which arms there is pivotably connected an upper arm 43 and a lower arm 44, respectively, belonging to a quadrangular construction 45 approximating a parallelogram. The arms 43 and 44 extend substantially in the direction of travel A and on their front ends they are pivotably connected to an upwardly extending plate 46 which is secured on the frame part 7 with screws. The upper arm of the quadrangular construction 45 comprises a screw spindle, so that the arm 43 is adjustable in length. Soil moving members 48 are attached to the bottom side of the carrier 41. The soil moving members 48 comprise two flat guide plates 49 extending vertically which, in a plan view, are disposed in the shape of a V and at an angle of about 60° with respect to each other, whilst they have a front line of contact or front edge 50 extending vertically. The lower edge of the guide plates 49 extends from the front edge 50 virtually horizontally, i.e. at an angle of between 85° and 90° to the front edge, in sideward and rearward directions. After between 5 and 10 cms from the front edge 50, this lower edge merges into an edge 52 extending obliquely upwards which, viewed from aside, is at an angle of about 30° with a horizontal line. The edge 52 bounds a part of a guide plate which is disposed, in relation to the remaining, greater part of the guide plate 49, on a folding line 51 at a smaller angle to the direction of travel A than that of the remaining part of the plate 49.

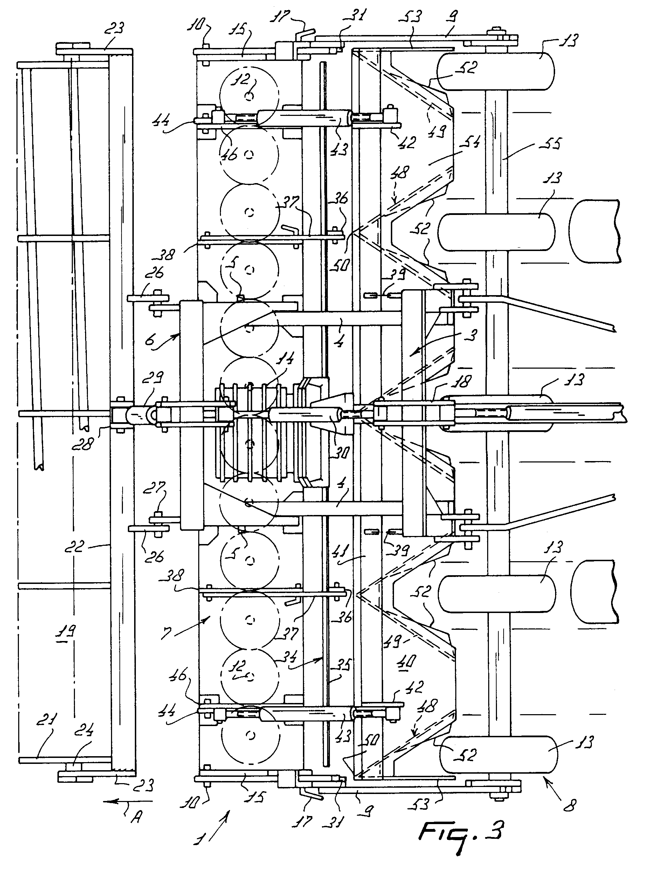

As is apparent from Figure 3, each of the outer soil moving members 48 is designed as a soil moving member half. Moreover, near its extremities, the soil moving arrangement 40 is provided with dividing walls 53 extending upwardly and in the direction of travel A. In accordance with the invention, the soil guiding plates 31 and the dividing walls 53 are disposed in alignment.

As is apparent from Figure 3, each of the soil moving members 48 is near its top connected with a neighbouring soil moving member through a connecting plate 54. The connecting plate 54 is to give more rigidity to the soil moving members 48. Between the lower, essentially horizontal edge of the guide plates 49 there is a triangular plate fixed by welding. This plate is a supporting member and it also gives more rigidity to the soil moving arrangement. The soil moving arrangement 40 is connected with the intermediate trestle 3 through two chains disposed on either side of the intermediate trestle 3. Owing to this, the arrangement 40 is movable in an upward direction with respect to the frame 7, e.g. with a view to passing an obstacle in the field. The chain 39, which may be substituted by any similar flexible device, is an easily adjustable device for limiting the working depth of the arrangement 40 with respect to the frame 7 or the soil cultivating members 11. A similar depth setting with a facility for evasive action in an upward direction is obtainable by making the arms 43 or 44 rest on a pin fed through any one out of a plurality of holes in the plate 46.

The sectional view of a field worked by the soil cultivating machine 1 as shown in Figure 4 comprises furrows 57 and ridges 56. According to the invention, the bottom width of a furrow is about 27 cms, whilst the width of the ridge will amount to an average of about 30 cms, with the latter value being dependent on the increase in volume in working the particular soil. The ridge height in Figure 4 is 20 cms.

The arrangement wherein the intermediate trestle 3 is provided with a pair of upper lugs 18 having a borehole 20 as well as a slotted hole 25, presents the possibility of using the machine 1 with and without a rear supporting member 8. In the embodiment including a rear supporting member 8, as depicted in Figures 1 - 3, the top link of a tractor should be coupled to the slotted hole or, otherwise, the upper connection between the tractor and the intermediate trestle 3 should comprise a chain. During operation, the intermediate trestle 3 is then pushed ahead only by the lower lift links of the tractor and, through the lower pair of arms 4 rigidly coupled to the intermediate trestle 3 and through the upper spacer member 30, it passes this pushing force on to the coupling trestle 6 placed on the frame 7. In the present embodiment, the frame part 7 is supported by the soil not only through the soil cultivating members 11 but also through the front supporting member 19 as well as through the rear supporting member 8, whilst the frame part 7 together with the supporting member 19 rigidly connected to said frame part is movable in height with respect to the rear supporting member 8. The arrangement supported both before and behind the soil cultivating members 11 has the advantages of a stable operation and a relatively accurately adjustable and constant working depth of the soil cultivating members 11. In applications of the machine 1, not according to the invention, without a rear supporting member 8, the upper connection between the tractor and the intermediate trestle 3 should comprise a top link coupled to the borehole 20 of the pair of lugs 18. In this situation, the weight of the soil cultivating machine 1 is borne by the front supporting member 19, the soil cultivating members 11 and the lift links of the tractor. The advantage of an embodiment without a rear supporting member 8 is that the weight of such a machine is lower, which is important e.g. in lifting the machine on the headland. In addition, the machine can be coupled closer to the tractor, which results in that a lower moment on the lift links of the tractor is required to lift the machine. For this coupling closer to the tractor, the arms 4 of the intermediate trestle 3 are of a telescopic design and the extensible parts of the arm 4 are lockable in various positions.

According to the invention, the present machine is connected to the front lift links of the tractor, whilst the planter is connected to the rear lift links. After the soil has been worked by the soil cultivating members 11, the soil laid down and level led is stripwise displaced sidewards by soil moving members 48. Owing to the fact that the soil moving members 48 are disposed at a considerable inter-space, in between soil moving members, ridges 56 develop which are made up of the loose soil processed and moved sidewards. In the present embodiment, the machine has a 3 m working width on which there are disposed three soil moving members 48 and two half soil moving members in the end positions. They produce four ridges 56 in one operation. The soil moving members 48 are preferably set up such that the reaction forces on the soil being moved are exerted sidewards, but essentially horizontally. This causes that the different soil layers remain in the same position as far as feasible, which means in actual practice that relatively moistier soil from lower levels is not moved upwards, which prevents the occurrence of moisture losses from the seedbed. At the same time it is prevented that the top-layer soil, which is usually dried up by the sun and wind, ends up in the sprout or root zone of the planting material. The horizontal reaction force caused by the disposition of a soil moving member 48 also produces the effect that the soil in the ridges is slightly compressed, which is favourable for the supply of moist from lower layers and which also gives some additional rigidity to the soil ridge 56 formed.

The creation of soil ridges 56 is aimed at protecting the worked soil from excessive compression by the rear supporting member 8 and especially by the wheels 13 of the vehicle bearing and moving the machine, the tractor in this case. Maintaining the loose structure of soil is important, especially for heavy soils. In contrast with that which occurs with relatively light soils, such as sandy soils, the compressed soil can only be loosened with difficulty and, often, in clods too large for the purpose in question. The supporting elements 13 of the rear supporting member 8 are therefore positioned in relation to the central carrier 55 such that each of them is borne by the soil in an open furrow 57. The furrows 57 made by the soil moving members 48 constitute favourable ruts for the wheels of the tractor to be used, which tractor may be provided with several narrow tyres disposed at a certain mutual distance. Though in Figure 2 the soil moving members are shown in a feasible position for a working depth amounting to about half that of the soil cultivating members 11, the preferable depth at which the soil moving members 48 operate is the same as the working depth of the soil cultivating members 11. It will be clear from the above that the inventive idea manifests itself best in the latter position.

As shown in Figure 3, the invention also comprises the combination of the soil cultivating machine 1 with a planting arrangement 2. The planting arrangement comprises furrow openers 58 disposed centrally on the width of the ridges for a relatively narrow furrow in which seed material 61 is deposited. When tubers are involved, the furrow depth corresponds with twice the average tuber thickness. Immediately behind the furrow opener there are provided a first pair of backfilling members which feed the soil moved aside by the furrow opener back into the furrow and then cover the seed material already deposited. These backfilling members operate on the top side of a ridge.

According to the invention, on the rear side of each of the backfilling members there is provided a pair of ridging-up members which operate on the sides 62 of a ridge 56. The ridging-up members are meant for repairing the shape of ridges disturbed by the furrow openers, and they are also suitable for realizing an actual sowing depth of twice the average potato tuber thickness in the event that high potato ridges are required. In the latter case, it is in the nature of things that the furrow openers are set to work less deep in the ridges. According to the invention, a potato planter is furthermore preferably supported by a wheel 13 in each furrow and the wheels are adjustable in height with respect to the planting arrangement, so that at different ridge heights the planting arrangement is capable of operating suitably in conjunction with the soil cultivating arrangement according to the invention as previously described.

## Claims

1. A soil cultivating machine (1), comprising coupling means for connection to the front power lift of a tractor, especially intended for application in conjunction with a planting arrangement for coupling to the rear side of the tractor, such as a potato planter (2) and the like, which machine comprises a frame provided with at least one row of soil cultivating members (11) which extends transversely to the operational direction of travel of the machine, and which machine comprises at least at its trailing side a supporting arrangement (8) for suspending the machine from the soil, characterized in that behind the row of soil cultivating members (11) and in front of said supporting arrangement (8) the machine is provided with a soil moving arrangement (40) including soil moving members (48) for moving sidewards the soil from a soil layer worked by the soil cultivating members (11) and for forming ridges (56), and in that the supporting arrangement (8) comprises a plurality of supporting elements (13), such as wheels , attached to a carrier (55), each of which being positioned such that during operation each is born by the soil in an open furrow (57) created near a ridge (56).

2. A soil cultivating machine as claimed in claim 1, characterized in that the said soil moving arrangement is connected to the frame through a quadrangular construction approximating a parallelogram, and that there are provided means (39) suitable for limiting in a downward direction the range of motion in height of the soil moving arrangement (40) with respect to the frame (7).

3. A soil cultivating machine as claimed in claim 1 or 2, characterized in that a supporting element (13) is made up of a roller part having an invariable cylindrical periphery or a roller part having a flexible or elastic periphery, such as a wheel, with a carrier (55) disposed centrally and functioning as shaft of the supporting elements (13).

4. A soil cultivating machine as claimed in any one of the preceding claims, characterized in that the machine is a rotary harrow.

5. A soil cultivating machine as claimed in any one of the preceding claims, characterized in that the soil moving arrangement (40) is coupled to the leading side of the frame by means of the quadrangular construction (45).

6. A soil cultivating machine as claimed in claim 5, characterized in that the upper arm of the quadrangular construction (45) is adjustable in length.

7. A soil cultivating machine as claimed in any one of the preceding claims, characterized in that the soil moving arrangement comprises soil working members (49) at which a lower edge extends virtually horizontally in sideward and rearward directions.

8. A combination of machines comprising a soil cultivating machine as claimed in any one of the preceding claims and a planting arrangement, such as a potato planter, the planting arrangement comprising furrow openers operating in the top soil layer of the said ridges for opening planting furrows, backfilling members for mainly feeding back soil moved by the furrow opener, and, behind said backfilling members, ridging-up members which are mainly operating on the sides of said strips of soil.

9. A combination of machines as claimed in claim 8, or a machine as claimed in any one of the preceding claims, characterized in that the planting arrangement comprises coupling means for connection to the rear power lift of a tractor.

## Patentansprüche

1. Bodenbearbeitungsmaschine (1) mit Anschlüssen zum Anschluß an die Fronthydraulik eines Schleppers, insbesondere zum Einsatz in Verbindung mit einer an die Heckseite des Schleppers anzuschließenden Pflanzmaschine, wie z. B. einer Kartoffellege- und Pflanzmaschine (2) und dergleichen, wobei die Bodenbearbeitungsmaschine einen mit mindestens einer Reihe von Bodenbearbeitungsgliedern (11) versehenen Rahmen aufweist, der sich quer zur Arbeitsrichtung der Maschine erstreckt, und wobei die Bodenbearbeitungsmaschine zumindest an ihrer Rückseite eine Stützvorrichtung (8) zum Abstützen der Maschine auf dem Boden aufweist,
dadurch gekennzeichnet, daß die Maschine hinter der Reihe von Bodenbearbeitungsgliedern (11) und vor der Stützvorrichtung (8) eine Bodenbewegungsvorrichtung (40) mit Bodenbewegungsgliedern (48) aufweist, um den Boden einer von den Bodenbearbeitungsgliedern (11) bearbeiteten Bodenschicht zur Seite zu schieben und Dämme (56) zu bilden, und daß die Stützvorrichtung (8) mehrere Stützelement (13) wie z. B. Räder aufweist, die an einem Träger (55) angebracht und jeweils derart positioniert sind, daß sie im Betrieb in einer nahe einem Damm (56) gebildeten offenen Furche (57) auf dem Boden abgestützt sind.

2. Bodenbearbeitungsmaschine nach Anspruch 1,
dadurch gekennzeichnet, daß die Bodenbewegungsvorrichtung mit dem Rahmen durch eine Viergelenk-Konstruktion verbunden ist, die annähernd einem Parallelogramm entspricht, und daß eine Vorrichtung (39) vorhanden ist, um die Höhenbewegung der Bodenbewegungsvorrichtung (40) relativ zu dem Rahmen (7) nach unten zu begrenzen.

3. Bodenbearbeitungsmaschine nach Anspruch 1 oder 2,
dadurch gekennzeichnet, daß ein Stützelement (13) aus einer Rolle mit gleichbleibendem Zylinderumfang oder einer Rolle mit flexiblem oder elastischem Umfang wie z. B. einem Rad besteht, wobei ein mittig angeordneter Träger (55) die Welle der Stützelemente (13) bildet.

4. Bodenbearbeitungsmaschine nach einem der vorhergehenden Ansprüche,
dadurch gekennzeichnet, daß die Maschine eine Kreiselegge ist.

5. Bodenbearbeitungsmaschine nach einem der vorhergehenden Ansprüche,
dadurch gekennzeichnet, daß die Bodenbewegungsvorrichtung (40) mittels der Viergelenk-Konstruktion (45) an die Vorderseite des Rahmens angeschlossen ist.

6. Bodenbearbeitungsmaschine nach Anspruch 5,
dadurch gekennzeichnet, daß der obere Arm der Viergelenk-Konstruktion (45) längenverstellbar ist.

7. Bodenbearbeitungsmaschine nach einem der vorhergehenden Ansprüche,
dadurch gekennzeichnet, daß die Bodenbewegungsvorrichtung Bodenbearbeitungsplatten (49) aufweist, deren Unterkante sich im wesentlichen in horizontaler Richtung seitwärts und nach hinten erstreckt.

8. Maschinenkombination aus einer Bodenbearbeitungsmaschine nach einem der vorhergehenden Ansprüche und einer Pflanzmaschine, wie z. B. einer Kartoffellege- und Pflanzmaschine, wobei die Pflanzmaschine Furchenzieher aufweist, um in der oberen Bodenschicht der Dämme Pflanzfurchen zu ziehen, Zudeckglieder, die im wesentlichen zum Zurückschieben der von dem Furchenzieher weggeschobenen Erde dienen, und hinter den Zudeckgliedern Häufelglieder, die im wesentlichen auf den Seiten der Bodenstreifen wirksam sind.

9. Maschinenkombination nach Anspruch 8 oder Maschine nach einem der vorhergehenden Ansprüche,
dadurch gekennzeichnet, daß die Pflanzmaschine Anschlüsse zum Anschluß an heckseitige Hydraulik eines Schleppers aufweist.

## Revendications

1. Machine de travail du sol (1) comprenant des moyens de couplage pour liaison au dispositif élévateur motorisé à l'avant d'un tracteur, spécialement destinée à être utilisée en association avec un dispositif planteur à atteler à l'arrière du tracteur, tel qu'une planteuse de pommes de terre (2) ou similaire, laquelle machine comprend un châssis muni d'au moins une rangée d'organes de travail du sol (11) qui s'étend transversalement au sens de marche du travail de la machine, et laquelle machine comprend, au moins à son côté postérieur, un dispositif de support (8) pour soutenir la machine à partir du sol,
**caractérisée** en ce que, derrière la rangée d'organes de travail du sol (11) et en avant dudit dispositif de support (8), la machine est munie d'un dispositif (40) déplaçant la terre, comportant des organes (48) déplaçant la terre pour entraîner latéralement la terre d'une couche de terre travaillée par les organes de travail du sol (11) et pour former des billons (56), et en ce que le dispositif de support (8) comprend une pluralité d'éléments de support (13) tels que des roues attachées à un élément porteur (55), chacune d'elles étant positionnée de telle sorte que, pendant le travail, chacune repose sur le sol dans un sillon ouvert (57) créé près d'un billon (56).

2. Machine de travail du sol selon la revendication 1, caractérisée en ce que ledit dispositif déplaçant la terre est relié au châssis par une structure quadrangulaire étant approximativement un parallélogramme, et en ce que sont prévus des moyens (39) appropriés pour limiter, dans un sens allant vers le bas, la portée de mouvement en hauteur du dispositif (40) déplaçant la terre, par rapport au châssis (7).

3. Machine de travail du sol selon la revendication 1 ou 2, caractérisée en ce qu'un élément de support (13) est constitué d'une partie de rouleau ayant une périphérie cylindrique invariable ou d'une partie de rouleau ayant une périphérie flexible ou élastique, telle qu'une roue, avec un élément porteur (55) disposé centralement et fonctionnant comme arbre des éléments de support (13).

4. Machine de travail du sol selon l'une quelconque des revendications précédentes, caractérisée en ce que la machine est une herse rotative.

5. Machine de travail du sol selon l'une quelconque des revendications précédentes, caractérisée en ce que le dispositif (40) déplaçant la terre est couplé au coté antérieur du châssis au moyen de la structure quadrangulaire (45).

6. Machine de travail du sol selon la revendication 5, caractérisée en ce que le bras supérieur de la structure quadrangulaire (45) est réglable en longueur.

7. Machine de travail du sol selon l'une quelconque des revendications précédentes, caractérisée en ce que le dispositif déplaçant la terre comprend des organes de travail du sol (49) dont un bord inférieur s'étend pratiquement horizontalement dans des directions vers le côté et vers l'arrière.

8. Combinaison de machines comprenant une machine de travail du sol selon l'une quelconque des revendications précédentes et un dispositif planteur tel qu'une planteuse de pommes de terre, le dispositif planteur comprenant des ouvreurs de sillons opérant dans la couche supérieure de terre desdits billons pour ouvrir des sillons de plantation, des organes remblayeurs, principalement pour ramener la terre déplacée par l'ouvreur de sillon et, derrière lesdits organes remblayeurs, des organes rehaussant les billons qui agissent principalement sur les flancs desdites bandes de terre.

9. Combinaison de machines selon la revendications 8, ou machine selon l'une quelconque des revendications précédentes, caracterisée en ce que le dispositif planteur comprend des moyens de couplage pour liaison avec le dispositif élévateur motorisé à l'arrière d'un tracteur.
